# EUROPEAN PATENT SPECIFICATION

(11) **EP 2 937 060 B1**
(45) Date of publication and mention of the grant of the patent: **07.09.2016**
(21) Application number: 14165367.5
(22) Date of filing: 22.04.2014
(51) Int. Cl.: A61C 8/00

(54) **Sinus implant**
Sinusimplantat
Implant de sinus

(43) Date of publication of application: 28.10.2015
(73) Proprietor: Star Generation Limited Taiwan Branch, Taipei City (TW)
(72) Inventor: Chen, Chun-Leon, 24449 New Taipei City (TW)
(74) Representative: Schwerbrock, Florian

(56) References cited:
- EP-A1- 2 578 182
- EP-A2- 1 658 824
- FR-A1- 2 975 891
- IL-A- 214 635
- US-A1- 2009 258 328
- US-A1- 2014 045 141

## Description

### BACKGROUND OF THE INVENTION

### 1. Field of the Invention:

The present invention relates to dental implant technology and more particularly, to a sinus implant that can synchronously push the selected amount of bone growth powder/biomedical filler into the crevice between the sinus floor and the upper gum without damaging or piercing the sinus floor.

### 2. Description of the Related Art:

In a typically dental implant procedure, prior to installation of the dental implant, the dentist will check the conditions of the gum. If the thickness of cortical bone is insufficient, a bone growth powder/biomedical filler must be supplemented to lift the thickness of the cortical bone. The bone growth powder/biomedical filler filling amount is determined subject to the condition of the patient's dental implant bone area. Thus, a proper implant bone growth powder/biomedical filler thickness can be provided.

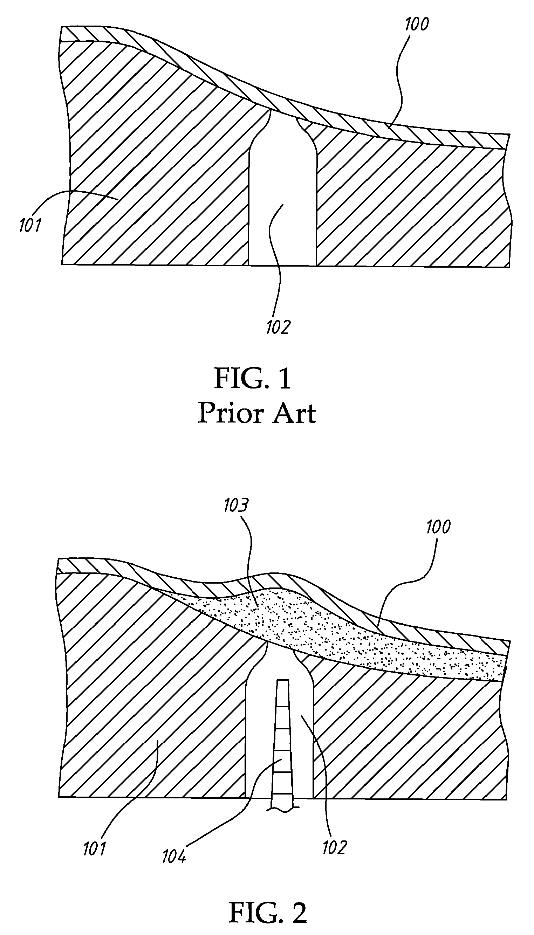

As illustrated in FIG. 1, if the thickness of the cortical bone (for example, upper gum) **101** in the implant area around the sinus floor **100** is insufficient and must be lifted, the existing method is to make a drill hole **102** in the cortical bone **101** by osteotomy, and then, as shown in FIG. 2, to separate a part of the sinus floor **100** from the cortical bone **101,** and then to fill a bone growth powder/biomedical filler **103** into the crevice between the sinus floor **100** and the cortical bone **101** so as to increase the thickness of the cortical bone **101** and to facilitate the follow-up implant installation procedure. During this bone growth powder/biomedical filler filling procedure, the amount of the applied bone growth powder/biomedical filler is determined subject to the condition of the patient's dental implant bone area. When separating the sinus floor **100** from the cortical bone **101,** the dentist must carefully perform the procedure not to pierce the sinus floor, avoiding serious sequelae.

An early bone growth powder/biomedical filler filling tool for dental implant comprises a push pin **104** at the end of a handle for pushing the applied bone growth powder/biomedical filler **103** from the drill hole **102** in the cortical bone **101** into the crevice between the cortical bone **101** and the sinus floor **100.** However, this bone growth powder/biomedical filler filling tool is not convenient to operate. It takes much time to fill the applied bone growth powder/biomedical filler into the crevice between the cortical bone and the sinus floor with this design of bone growth powder/biomedical filler filling tool. Operating this bone growth powder/biomedical filler filling tool is a big burden to the dentist and can make the patient feel uncomfortable.

Taiwan Patent M440763 discloses an improved design of bone growth powder/biomedical filler filling tool. This design of bone growth powder/biomedical filler filling tool comprises a bone growth powder/biomedical filler propelling bit that has opposing top end portion and bottom end portion, bone growth powder/biomedical filler transferring grooves spirally extending around the periphery thereof from the top end portion to the bottom end portion, and bone growth powder/biomedical filler propelling threads extending around the periphery thereof at different elevations for rapidly and uniformly propelling bone growth powder/biomedical filler into the space between the sinus floor and the cortical bone to increase the thickness of the cortical bone in favor of the process of the subsequent tooth implanting, helping the doctor in charge of the operation save operating time and physical strength. This design of bone growth powder/biomedical filler filling tool can help the dentist reduce fatigue and shorten the period the patients feel uncomfortable. However, this design of bone growth powder/biomedical filler filling tool is just a simple tool for filling bone growth powder/biomedical filler prior to the implant installation procedure.

EP2578182 discloses a dental implant.

### 20 SUMMARY OF THE INVENTION

The present invention has been accomplished under the circumstances in view. It is one object of the present invention to provide a sinus implant that simultaneously pushes the applied bone growth powder/biomedical filler into place without damaging or piercing the sinus floor during installation.

To achieve this and other objects of the present invention, a sinus implant in accordance with the present invention comprises a mounting hole axially defined therein, a plurality of positioning threads spirally upwardly extended around the periphery thereof and gradually reducing in width in direction from a bottom side toward an opposing top side thereof, at least one spiral groove extending around the periphery thereof across the positioning threads, and a pushing tip of reduced diameter located at respective top ends of the positioning threads. The tip comprises a flat end face, and a recess space defined in the flat end face in communication with each spiral groove.

Preferably, the pushing tip further comprises a smoothly arched outer guide edge extending around the border of the flat end face, and a smoothly arched inner guide edge extending around the recess space within the flat end face.

Preferably, the recess space is shaped like a hemisphere.

Further, the positioning threads and each spiral groove can be designed to extend spirally upwardly in the same direction. Alternatively, the positioning threads and each spiral groove can be designed to extend spirally in reversed directions.

### BRIEF DESCRIPTION OF THE DRAWINGS

FIG. 1 is a schematic sectional view illustrating a drill hole formed in upper gum by osteotomy.
FIG. 2 corresponds to FIG. 1, illustrating a bone growth powder/biomedical filler filled in the crevice between the upper gum and the sinus floor.
FIG. 3 is an oblique top elevational view of a sinus implant in accordance with a first embodiment of the present invention.
FIG. 4 is a front view of the sinus implant in accordance with the first embodiment of the present invention.
FIG. 5 is a longitudinal sectional view of the sinus implant in accordance with the first embodiment of the present invention.
FIG. 6 is a top view of the sinus implant in accordance with the first embodiment of the present invention.
FIG. 7 is a schematic applied view of the first embodiment of the present invention, illustrating the installed position of the sinus implant relative to the upper gum and the sinus floor.
FIG. 8 is an enlarged view of Part A of FIG. 7.
FIG. 9 is a schematic drawing illustrating the action of the installation of the sinus implant of the first embodiment of the present invention in the upper gum.
FIG. 10 is an oblique top elevational view of a sinus implant in accordance with a second embodiment of the present invention.
FIG. 11 is a schematic drawing illustrating the action of the installation of the sinus implant of the second embodiment of the present invention in the upper gum.

### DETAILED DESCRIPTION OF THE PREFERRED EMBODIMENT

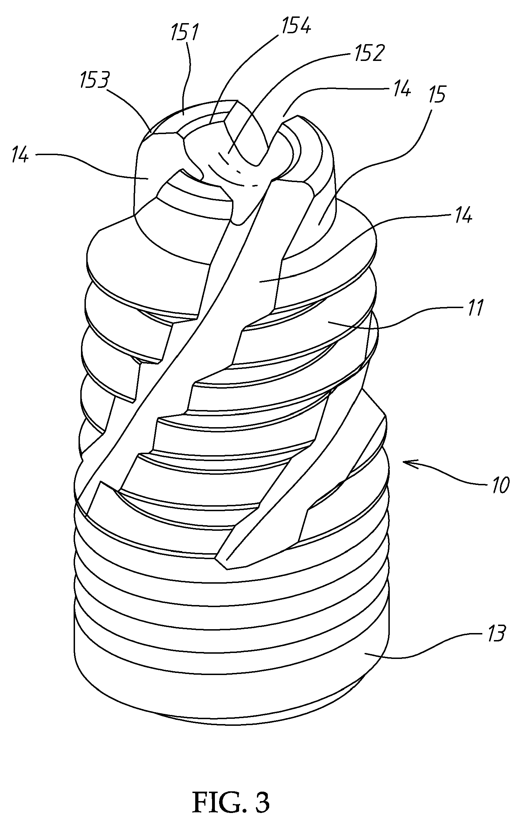

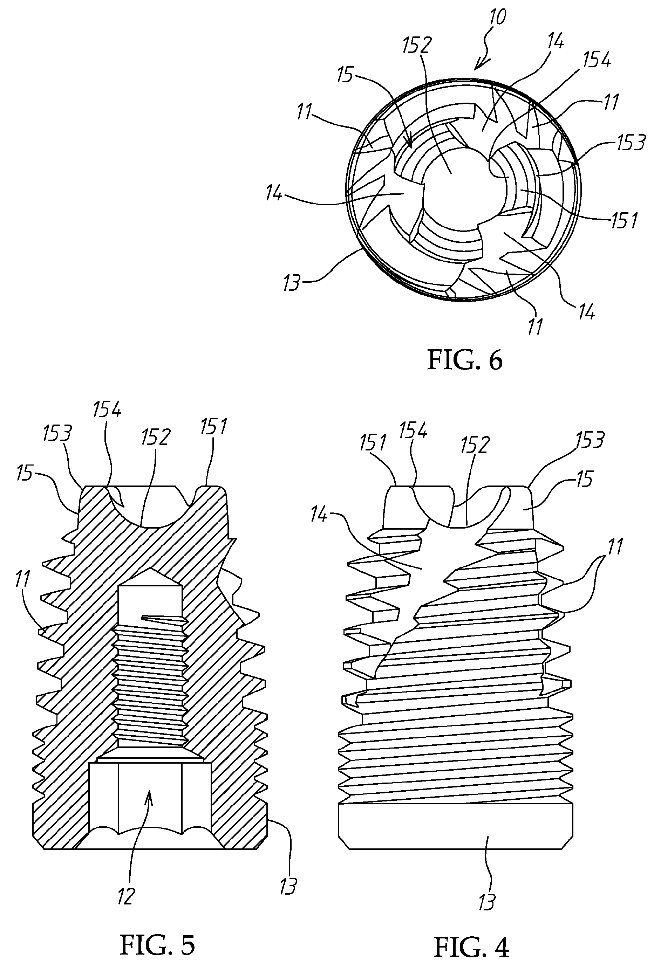

Referring to FIGS. 3-6, a sinus implant **10** in accordance with a first embodiment of the present invention is shown. The sinus implant **10** is prepared from zirconium dioxide, comprising an implant root **13** at a bottom side thereof, a mounting hole **12** axially defined therein and upwardly extended from a bottom edge of the implant root **13** to a predetermined height (see FIG. 5), a plurality of positioning threads **11** spirally upwardly extended around the periphery thereof and gradually reducing in width in direction from the implant root **13** toward an opposing top side thereof to form a gum-drilling structure. In this embodiment, the positioning threads **11** extend upwardly in clockwise direction at a fixed pitch. However, this thread extending direction is simply an example but not intended to limit the present invention. Alternatively, the positioning threads **11** can be designed to extend upwardly in counter-clockwise direction.

The sinus implant **10** further comprises at least one, for example, three spiral grooves **14** upwardly extending around the periphery thereof across the positioning threads **11** and equally spaced from one another, and a pushing tip **15** of reduced diameter located at the ends of the positioning threads **11** (i.e. at the top side of the sinus implant **10)** in axial alignment with the mounting hole **12.** The pushing tip **15** defines a flat end face **151,** and a recess space **152** in the flat end face **151** in communication with the spiral grooves **14.**

In order to facilitate pushing and bone pile and delivery in a save manner, the border area of the flat end face **151** is preferably smoothened. In this embodiment, the flat end face **151** has a smoothly arched outer guide edge **153** around the border thereof, and a smoothly arched inner guide edge **154** in the recess space **152.**

Further, in this embodiment, the recess space **152** is shaped like a hemisphere. However, this hemispherical shape is simply an example. The recess space **152** can also be made in any other geometrical shape for accommodation a bone growth powder/biomedical filler.

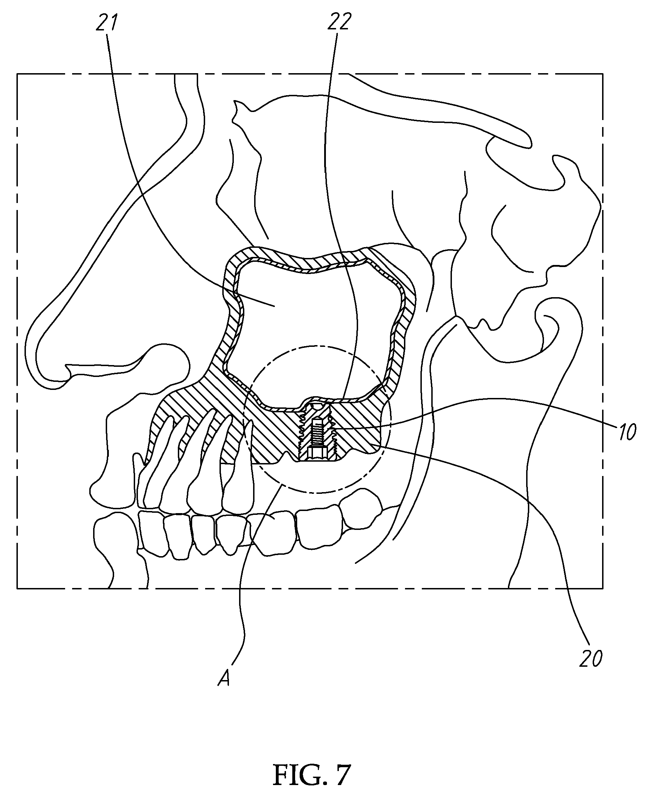

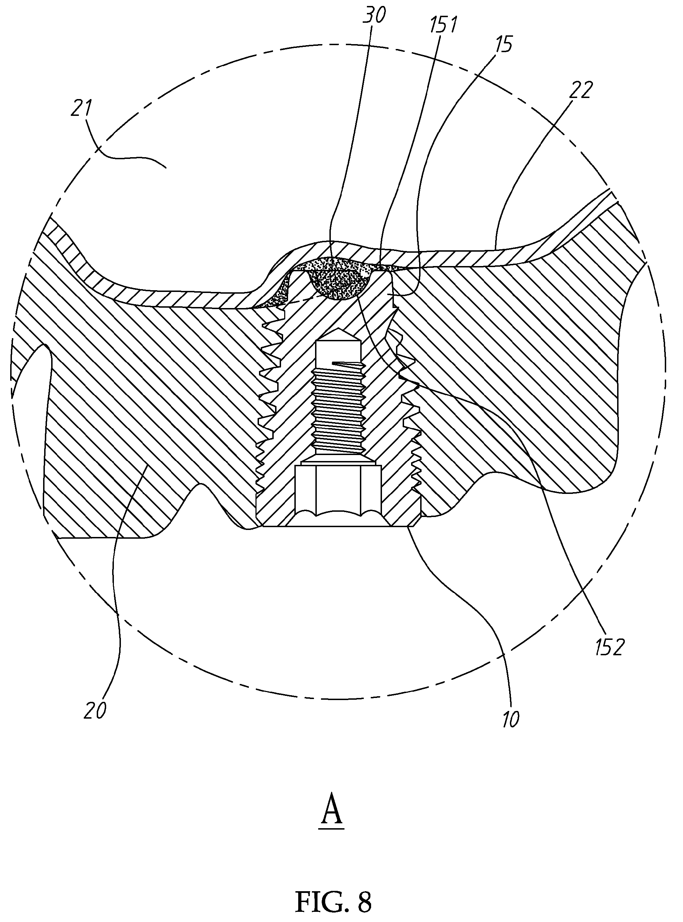

Referring to FIG. 7, in an upper gum **20** implant surgery, the sinus implant **10** must be driven into the upper gum **20** to push the sinus floor (mucosa) **22** of the sinus **21** for filling a bone growth powder/biomedical filler. During the implant surgery, the dentist fills a bone growth powder/biomedical filler **30** into the drill hole that was made by osteotomy, and then drives the sinus implant **10** into the drill hole. At this time, the design of the spiral grooves **14** of the sinus implant **10** and the design of the recessed space **152** in the flat end face **151** of the pushing tip **15** enable the applied bone growth powder/biomedical filler **30** to be pushed forwards by the sinus implant **10.** As the pushing tip **15** gradually pushes open the sinus floor **22,** the bone growth powder/biomedical filler **30** is forced to enter the crevice between the sinus floor **22** and the upper gum **20,** and thus, the bone growth powder/biomedical filler filling operation is synchronously done when the installation of the sinus implant **10** is completed (see FIG. 8).

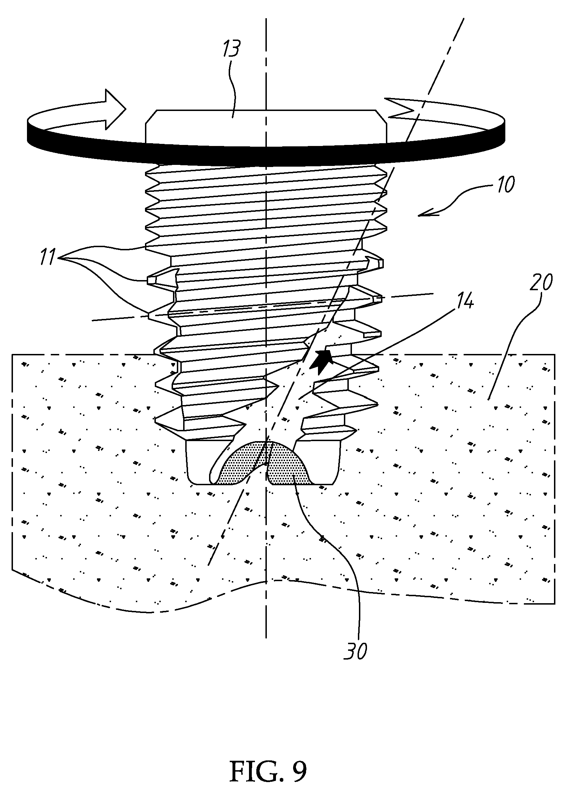

Referring to FIG. 9, the spiral grooves **14** and positioning threads **11** of the sinus implant **10 in** accordance with the first embodiment of the present invention extend spirally in the same direction. Therefore, when driving the sinus implant **10** into the upper gum **20,** each spiral groove **14** works as a chip discharging channel for expelling upper gum chips or excessive bone growth powder/biomedical filler. This embodiment is practical for a patient who needs a less amount of bone growth powder/biomedical filler to be filled in the sinus floor.

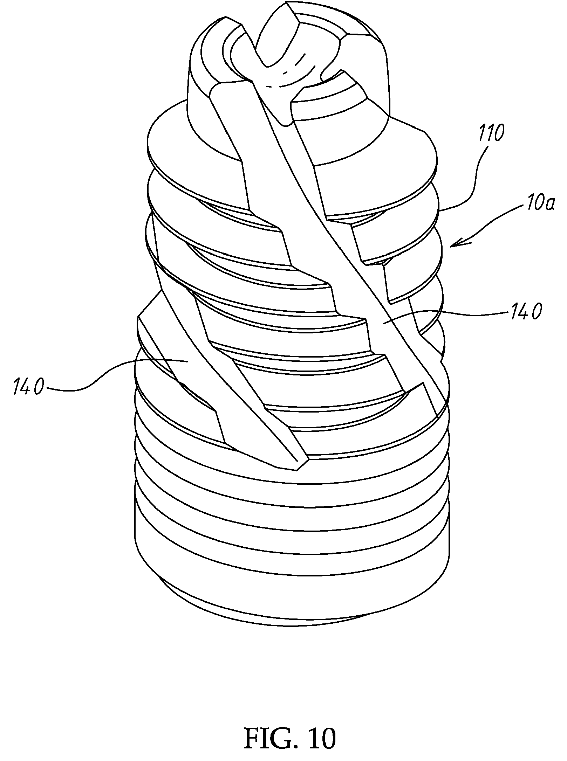

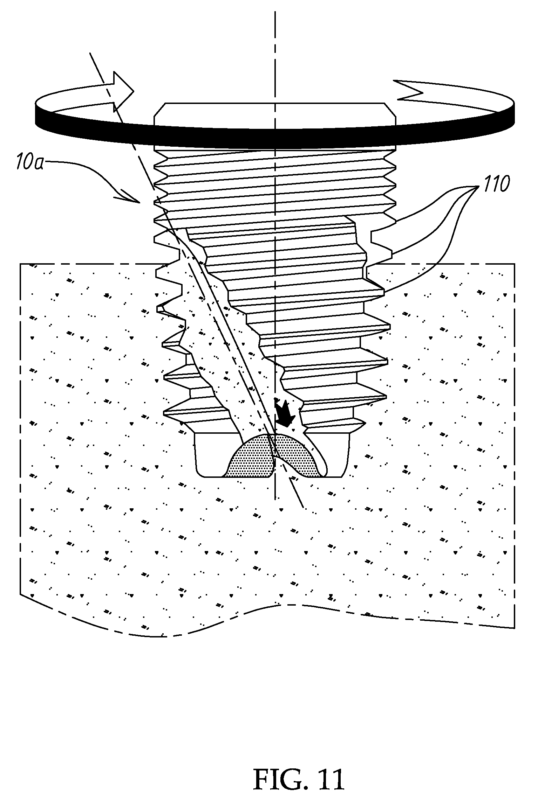

FIG. 10 illustrates a sinus implant **10a** in accordance with a second embodiment of the present invention. This second embodiment is substantially similar to the aforesaid first embodiment with the exception that the spiral grooves **140** and positioning threads **110** of the sinus implant **10a** of this second embodiment extend spirally in reversed directions, i.e., the positioning threads **110** extend spirally and upwardly in clockwise direction, and the spiral grooves **140** extend spirally and downwardly in counter-clockwise direction. Thus, when driving the sinus implant **10a** into the patient's upper gum in clockwise direction, as shown in FIG. 11, the bone growth powder/biomedical filler and cut chips will be wholly forced by the positioning threads **110** into the crevice between the sinus floor and the upper gum. Thus, this embodiment is practical for a patient who needs a large amount of bone growth powder/biomedical filler to be filled in the sinus floor.

In conclusion, the invention provides a sinus implant that is not only effective to prevent from piercing the sinus floor in the sinus implant surgery but also capable of synchronously pushing a selected amount of bone growth powder/biomedical filler into the sinus floor when it is driven into position.

## Claims

1. A sinus implant (10), comprising a mounting hole (12) axially defined therein, a plurality of positioning threads (11) spirally upwardly extended around the periphery thereof and gradually reducing in width in direction from a bottom side toward an opposing top side thereof, at least one spiral groove (14) extending around the periphery thereof across said positioning threads (11), and a pushing tip (15) of reduced diameter located at respective top ends of said positioning threads (11), said pushing tip (15) comprising a flat end face (151), and a recess space (152) defined in said flat end face (151) in communication with each said spiral groove (14).

2. The sinus implant (10) as claimed in claim 1, wherein said pushing tip (15) further comprises a smoothly arched outer guide edge (153) extending around the border of said flat end face (151), and a smoothly arched inner guide edge (154) extending around said recess space within said flat end face (151).

3. The sinus implant (10) as claimed in claim 1, wherein said recess space (152) is shaped like a hemisphere.

4. The sinus implant (10) as claimed in claim 1, wherein said positioning threads (11) and each said spiral groove (14) extend spirally upwardly in the same direction.

5. The sinus implant (10a) as claimed in claim 1, wherein said positioning threads (110) and each said spiral groove (140) extend spirally in reversed directions.

## Patentansprüche

1. Sinus-Implantat (10) mit einer axial darin definierten Befestigungsöffnung (12), mehreren Positionierungsgewinden (11), die sich spiralförmig um die Peripherie davon herum nach oben erstrecken und sich fortschreitend in der Breite von einer unteren Seite zur gegenüberliegenden Seite davon verringern, mindestens einer spiralförmigen Nut (14), die sich um die Peripherie davon über die Positionierungsgewinde (11) erstreckt, und einem Drückstift (15) mit einem reduzierten Durchmesser, der an den entsprechenden oberen Enden der Positionierungsgewinde (11) angeordnet ist, wobei die Drückspitze (15) eine flache Stirnfläche (151) und eine Aussparung (152) aufweist, die in der flachen Stirnfläche (151) definiert ist und mit der Spiralnut (14) in Verbindung steht.

2. Sinus-Implantat (10) nach Anspruch 1, wobei die Drückspitze (15) ferner eine sanft gebogene äußere Führungskante (153) umfasst, die sich um die Begrenzung der flachen Stirnfläche (151) herum erstreckt, und eine sanft gebogene innere Führungskante (154), die sich um die Aussparung in der flachen Stirnfläche (151) herum erstreckt.

3. Sinus-Implantat (10) nach Anspruch 1, wobei die Aussparung (152) halbkugelförmig ausgebildet ist.

4. Sinus-Implantat (10) nach Anspruch 1, wobei die Positionierungsgewinde (11) und jede spiralförmige Nut (14) sich in die gleiche Richtung spiralförmig nach oben erstrecken.

5. Sinus-Implantat (10a) nach Anspruch 1, wobei die Positionierungsgewinde (110) und jede spiralförmige Nut (14) sich spiralförmig in umgekehrter Richtung nach oben erstrecken.

## Revendications

1. Un implant sinusien (10) comprenant un orifice de montage (12) défini axialement dans celui-ci, une pluralité de filetages de positionnement (11) s'étendant en spirale vers le haut autour de sa périphérie et diminuant progressivement en largeur dans une direction allant d'une face inférieure à une face supérieure opposée de celle-ci, au moins une rainure en spirale (14) s'étendant autour de sa périphérie et passant par les dits filetages de positionnement (11), et un embout de poussée (15) de diamètre réduit situé aux extrémités supérieures respectives des dits filetages de positionnement (11), le dit embout de poussée (15) comprenant une face d'extrémité plate (151), et un évidement (152) défini dans la dite face d'extrémité plate (151) en communication avec chaque dite rainure en spirale (14).

2. L'implant sinusien (10) selon revendication 1, **caractérisé en ce que** le dit embout de poussée (15) comprend en outre un bord de guidage extérieur légèrement arqué (153) s'étendant autour de la bordure de la dite face d'extrémité plate (151), et un bord de guidage intérieur légèrement arqué (154) s'étendant autour du dit évidement dans la dite face d'extrémité plate (151).

3. L'implant sinusien (10) selon revendication 1, **caractérisé en ce que** le dit évidement (152) est en forme d'hémisphère.

4. L'implant sinusien (10) selon revendication 1, **caractérisé en ce que** les dits filetages de positionnement (11) et chaque dite rainure en spirale (14) s'étendent en spirale vers le haut dans la même direction.

5. L'implant sinusien (10a) selon revendication 1, **caractérisé en ce que** les dits filetages de positionnement (110) et chaque dite rainure en spirale (140) s'étendent en spirale dans des directions inverses.
